# EUROPEAN PATENT SPECIFICATION

(11) **EP 1 599 418 B1**
(45) Date of publication and mention of the grant of the patent: **25.12.2013**
(21) Application number: 04716616.0
(22) Date of filing: 03.03.2004
(51) Int. Cl.: C01G 19/00, C01G 19/02, H01B 1/08, H01B 1/16

(54) **METHOD FOR MANUFACTURING ELECTRICALLY CONDUCTIVE MATERIAL**
VERFAHREN ZUR HERSTELLUNG VON ELEKTRISCH LEITFÄHIGEM MATERIAL
PROCEDE DE FABRICATION DE MATERIAU CONDUCTEUR D'ELECTRICITE

(30) Priority: 03.03.2003 FI 20030325
(43) Date of publication of application: 30.11.2005
(73) Proprietor: NORDKALK OY AB, 21600 Parainen (FI)
(72) Inventor: MÄKI, Juhani, Kaivanto FI-36570 (FI)
(74) Representative: Suominen, Kaisa Liisa
(86) International application number: PCT/FI2004/000113
(87) International publication number: WO 2004/078651

(56) References cited:
- WO-A1-95/11512
- US-A- 4 246 143

## Description

The invention relates to a method for manufacturing an electrically conductive stanniferous material, in which method a reaction mixture, which contains at least such a tin(II)-bearing compound that is capable of producing a tin(IV)-bearing compound in reaction conditions, fluoride, and at least one other compound selected from a group consisting of the oxides of some other element, is brought to an elevated temperature in the presence of an oxidant.

In reference to current state of the art regarding electrically conductive plastic products and elastomers, it must be concluded that the use of carbon black becomes problematic in attempting to achieve a limited conductivity level, e.g. in ESD applications in electronics industry. This is due to a steep percolation curve for carbon, as a result of which a relationship between the filling degree percentage and the conductivity level is hard to anticipate. Solutions have been proposed, including various carbon black coating processes for reducing the basic conductivity level of carbon, as well as the use of mineral fillers coated with electrically conductive mixed oxides.

The prior art methods for manufacturing conductive oxide coatings are usually based on tin(IV)oxide, which is rendered conductive by supplementing the tin(II)oxide- or hydroxide-containing material to be oxidized with 5-10 % by weight of oxide or hydroxide of another element, which, in order to achieve a preferred conductivity level, should appear in the final product at an oxidation number other than +4, preferably at a lower oxidation number. Thus, in accordance with semiconductor terminology, the composition produced in the oxidation process is a p-type alloy. Although tin(II)oxide can be formed with incomplete oxidation into a mixed oxide SnO₂/SnO which has a high conductivity level, the achievement of a desired oxide ratio is generally problematic and the prior art describes no reliable methods for controlling the reaction. In the presence of foreign elements, the oxidation of tin(II) compounds can be brought to a level as complete as possible and, hence, the reaction temperature or the reaction time does not have such a critical significance. Commercial tin-oxide based conductive materials usually contain as an additive, as a so-called doping agent, indium(III)oxide or antimony(III)oxide, the latter being more economical in use. However, both of these oxides, particularly indium oxide, are toxic. Other oxides may also be considered as additives, such as for example oxides of VIb group elements, which may be present at a variety of oxidation numbers. In this context, the VIb group elements are cited in reference to chromium (Cr), molybdenum (Mo), and tungsten (W), the preferred ones being molybdenum and tungsten.

Prior known methods for coating a mineral filler with electrically conductive tin-oxide based materials can be basically divided in two categories, in solution-chemical precipitation processes and vapour-deposition processes.

In precipitation processes, an acidified solution of tin(II)chloride and oxide, present as a doping agent, is added gradually into a suspension containing a filler to be coated and water or a water/alcohol mixture, while supplementing the mixture with alkali, usually a carbonate solution. Thus, the solution of metal salts precipitates as hydroxides, but the method is not optimal because precipitation takes place in non-homogeneous conditions in which the adjustment of a consistent pH-value is difficult. In this case, the suspension is more like a mixture of metal hydroxides and fillers rather than a filler coated with hydroxides. Subsequent operations in the production of materials include filtering, washing, drying, and milling to a desired particle size. Filtering has often proved problematic with comminuted mineral fillers, since filtering may be a slow process and the filter cake usually develops cracks, which complicates washing the product free of unnecessary salts left in the solution. Finally, hydroxides contained in the comminuted product are turned into oxides at a temperature of about 500°C in the presence of air, the conversion to tin(IV)oxide also taking place at this temperature.

In vapour-deposition methods, the previously prepared conductive oxide mixture is vapour-deposited directly onto the surface of mineral fillers, usually in vacuum conditions. According to prior known technology, the method is only adaptable with few types of fillers, which must be principally oxides or glass powders in terms of the chemical structures thereof. Indeed, the commercially available inorganic conductive fillers are usually TiO₂-based SnO₂/Sb₂O₃ preparations.

With regard to the above solution-chemical method, it should further be noted that e.g. calcite and wollastonite decompose immediately in acidic conditions and that even minor resulting amounts of tin silicate or tin carbonate impair essentially the oxidation process. One possibility of protecting the surface of a mineral filler is offered by various coatings, such as TiO₂-coatings, for which process descriptions have been disclosed for example in connection with wollastonite, mica, and barium sulphate. However, the processes lead to complicated solution-chemical operations, resulting in drawbacks as discussed above.

Publication US 4,705,701 discloses a method for the preparation of transparent and conductive tin oxide, in which method a mixture of a phosphorus-fluoride compound or a non-metallic fluorocarbon compound and an organic tin compound is arranged on top of some material in acidifying conditions. Hence, the publication describes a coating method, wherein the compounds are vapour-deposited or sprayed on top of a material to be coated. The applied temperatures are typically 400-600°C.

US 4,246,143 discloses a process of preparing conductive tin dioxide powder which is doped with antimony oxide by heating a mixture of stannous oxalate and an antimony compound, preferably a halide, to form tin dioxide through thermal decomposition of stannous oxalate.

Accordingly, it is an object of the invention to provide a method for the preparation of stanniferous or tin-bearing, electrically conductive materials, which method is more convenient and simpler than prior known methods, i.e. economical to exploit on industrial scale.

The invention relates to a method according to claim 1 for manufacturing an electrically conductive stanniferous material, in which method a reaction mixture, which contains at least such a tin(II)-bearing compound that is capable of producing a tin(IV)-bearing compound in reaction conditions, fluoride, and at least one other compound selected from a group consisting of the oxides of some other element, is brought to an elevated temperature in the presence of an oxidant. The said reaction mixture is in a solid state.

Accordingly, the invention is based on an unexpected discovery that a finely powdered mechanical mixture of a tin(II)-bearing compound, fluoride and the oxide of some other element can be converted in the presence of an oxidant at an elevated temperature into a material which has a remarkably high electrical conductivity, without having to supplement the mixture with heavy metal oxides as doping agents. This has resulted in a method, which is more convenient and simpler than prior known methods, i.e. economical to exploit on industrial scale.

It is obvious for a person skilled in the art as to which tin(II)-bearing compounds are capable of forming a tin(IV)-bearing compound in reaction conditions. The tin(II)-bearing compound is selected from a group consisting of tin(II)oxide, tin(II)hydroxide, tin(II)nitride, and mixtures thereof. Hereinafter, the term tin(II)-bearing compound is used in reference to a compound capable of forming a tin(IV)-bearing compound in reaction conditions.

In this specification, reference is made to the partial oxidation of a tin(II)-bearing compound by using the term burning, because among its characterizing features the process includes heat and light phenomena associated with that term.

A finely powdered or comminuted mechanical mixture of a tin(II)-bearing compound and of the other compounds defined in claim 1 can be converted alone or mixed with any mineral filler or other filler, and the result is a material which has a remarkably high electrical conductivity.

According to the invention, said fluoride is selected from a group consisting of alkali metal fluorides, alkali earth fluorides, tin fluoride, antimony fluoride, indium fluoride, fluorite minerals, and mixtures thereof. Preferably, the fluoride is potassium fluoride. Alkali metals refer in this context to lithium (Li), sodium (Na), potassium (K), rubidium (Rb), cesium (Cs), and francium (Fr). The preferred ones are lithium, sodium and/or potassium. Alkali earth metals refer in this context to beryllium (Be), magnesium (Mg), calcium (Ca), strontium (Sr), barium (Ba), and radium (Ra). The preferred ones are magnesium, calcium and/or barium. It is further possible to use fluoride-containing binary salts, such as for example dipotassium-calciun phosphate fluoride.

In a closer examination regarding the effect of various fluorides on electrical conductivity, it has been discovered that potassium fluoride KF is considerably more effective than the corresponding Na- and Ca-compounds. In some cases, on the other hand, calcium fluoride may have the advantage that, being poorly soluble in water, it can be generated or doped with tin(II)oxide, tin(II)hydroxide, mineral fillers or mixtures thereof for example in aqueous solutions, without appreciable fluoride appearing in the filtrates.

It has also been surprisingly discovered that fluorides reduce activation energy associated with an oxidation reaction, the result of which is a remarkably low ignition temperature. The reaction is exothermal, which manifests itself as a clearly perceivable steady glow. A low ignition temperature naturally contributes towards lower manufacturing costs.

The proportion of fluoride in the reaction mixture is 1-30 % by weight as calculated from the total weight of a tin(II)-bearing compound and at least one other compound. In order to achieve a desired conductivity level, the proportional percentage of fluoride may vary for example within the range between 10% by weight and 15 % by weight, when the proportion of a filler in the mixture is disregarded. The optimal fluoride content depends on which fluoride is used, and in the case of potassium fluoride, it is close to the amount 15 % by weight. The proportion of fluoride can be for example 1-10 % by weight, 5-15 % by weight, 10-20 % by weight, 10-30 % by weight, 20-30 % by weight or 5-25 % by weight.

According to the invention, said oxide of another element is antimony(III)oxide or indium(III)oxide. For a skilled person, however, it is obvious which other oxides can be used. Particularly prior known doping agents, of which some are listed above, are possible.

According to the invention, the oxidant is selected from a group consisting of air, oxygen, ozone, and inorganic oxidants. The oxidant can be for example air or oxygen, yet with such a reservation that said gases must be sufficiently available considering the oxidizing material. Although the fluoride used in the mixture makes it possible to have a low ignition point, which can be even less than 300°C instead of the conventional over 500°C, it is necessary to make sure in industrial manufacturing that the material containing a tin(II)-bearing compound and fluoride as well as possibly a mineral filler will be mixed in the presence of an oxidant, for example air, until the partial oxidation is accomplished.

Another option is the use of an inorganic oxidant mechanically powdered into a mixture, which contains a mineral filler in question, a tin(II)-bearing compound, and the compounds defined in claim 1. In principle, the oxidant can be any prior known oxidant, such as chlorate, perchlorate, permanganate, chromate or the like, preferably nitrate or nitrite, which are shearable without ignition hazard and which do not produce heavy metals or for example chlorides in the end product When implemented for example, with potassium nitrate, KNO₃, the process is highly manageable without any problems associated with oxygen supply other than the calculatory dimensioning of the oxidant in proportion of tin oxide. With both oxidation methods it is possible to achieve sufficient conductivity levels, for example in reference to calcite and wollastonite, which fillers are hard to make conductive by other methods.

According to the invention, said tin(II)-bearing compound is selected from a group consisting of tin(II)oxide, tin(II)hydroxide, tin(II)nitride, and mixtures thereof. If desired, tin(II)oxide can be replaced by using any such compound which is capable of producing the same compound in reaction conditions.

The tin(II)-bearing compound can be for example tin(II)hydroxide, which is prepared by mixing a water-soluble tin salt and at least an equivalent amount of precipitant in an aqueous solution, by separating the precipitated tin(II)hydroxide, and by drying the tin(II)hydroxide. Preferably, the precipitant is alkali carbonate. In addition to a tin salt and a precipitant, it is possible to supplement the mixture with a filler as well.

As stated above, the reaction mixture contains also a filler according to one embodiment of the invention. The filler can be selected for example from a group consisting of barium sulphate, glass powder, silica, wollastonite, calcite, calcium fluoride, phosphate minerals, fluorite minerals, and mixtures thereof.

According to still another embodiment of the invention, the reaction mixture further contains salts of other elements, such as alkali metal phosphates, preferably acidic potassium phosphates.

According to the invention, the applied elevated temperature is 100-1000°C.

According to one embodiment of the invention, an electrically conductive mineral filler is thus manufactured by heating, in the presence of oxygen to an ignition temperature, a powdered mixture, which contains filler and, as calculated from the total amount of mixture, about 5-40, preferably 20-30% by volume of tin(II)oxide and alkali metal or earth alkali metal fluoride, preferably potassium fluoride. In the case of potassium fluoride, the weight ratios of tin oxide and fluoride are about 85/15, whereby the achieved conductivity level approaches optimal. In order to secure the supply of oxygen, such a powdered mixture can be, for example, mixed mechanically in the presence of oxygen or air can be fed through the powder layer until the detected exothermal reaction has ended. Other relevant processing modes include for example an inclined rotary tubular furnace or possibly a gravity type reactor, wherein a preheated powder mixture is dropped in continuous supply through air or oxygen into a receiver and then reclaimed.

According to one embodiment of the invention, the above-described mechanical mixture of a filler, tin(II)oxide, and some other compounds as described above is further supplemented by adding a solid inorganic oxidant, preferably potassium nitrate or nitrite, in which case the oxygen supply need not be specifically taken care of. For example, in the case of potassium nitrate, KNO₃, the amount needed for oxidizing tin oxide can be about 1/3 equivalents calculated relative to tin(II)oxide in the mixture, which extra cost is minimal in view of other manufacturing expenses of the material. As a result of the reaction-inhibiting effect of a mineral filler, the reaction rate is in the same order as in the embodiment described above.

According to yet another embodiment outside of the scope of the claims the poorly water-soluble fluoride, such as alkali earth metal fluoride or fluorite mineral, can be bonded to mineral fillers in a solution-chemical process in the purpose that the fluorides or mixtures thereof, during the course of the above-described doping or oxidation processes, enhance the electrical conductivity of fillers. One option associated with this embodiment is to precipitate the fluoride in a filler suspension, for example by means of calcite and a fluoride-ions producing material, in the same purpose. Relevant reagents may then include for example hydrofluoric acid, hexafluorosilicic acid or hexafluorotitanic acid, the latter two being able to produce hydrofluoric acid through hydrolysis.

The invention further relates to a method according to claim 1 for the manufacturing of an electrically conductive stanniferous material, in which method a solid state mixture, containing tin(II)oxide and some other compound as described above, is brought to a temperature of 100-1000°C in the presence of an oxidant.

Likewise, the invention relates to a method according to claim 1 for the manufacturing of an electrically conductive stanniferous material, in which method a solid state mixture, containing tin(II)nitride and some other compound as described above, is brought to a temperature of 100-1000°C in the presence of an oxidant. Thus, for example tin(II)oxide is first converted to nitride, for example by heating the oxide in the presence of gaseous dried ammonia, whereafter the nitride is supplemented with a calculated amount of fine fluoride and, if desired, a filler mineral. The mixture is burned by using the oxidation processes described above. Application of the method for example to fluorite (CaF₂) has provided exceptionally high electrical conductivities.

The invention further relates to a method according to claim 1 for manufacturing an electrically conductive stanniferous material, in which method a solid state mixture, containing tin(II)hydroxide and some other compound as described above, is brought to a temperature of 100-1000°C in the presence of an oxidant.

The foregoing embodiments and material options apply also to these three methods.

Moreover, an electrically conductive stanniferous material is prepared according to the method of the invention. Such a material is useful for example in plastics industries.

Indeed, when studying the external features of conductive materials manufactured according to the method of the invention, it must be concluded that, regardless of the oxidation method, the products are generally light-coloured, the colour of pure tin(IV)oxide being typically white. The mineral fillers coated with a method of the invention have a slightly darker hue, yet to be readily dyeable for some lighter hue, for example with phtalocyanine dyes. The colour of the products turns immediately substantially darker as a second doping agent, such as for example phosphate or antimony oxide, is added to the mixture to be fired. Both oxidation methods produce dust-free particles having a diameter typically less than 0,5 mm, which implies that the products contain sintering components. However, due to their porosity, the particles are brittle and, thus, can be readily milled for an intended application, for example in an extruder. Accordingly, there is also provided a material that can be used in such applications in which carbon black is not advisable because of its colour.

It is also described a method of preparing tin(II)oxide, said method being characterized in that a water-soluble tin salt and at least an equivalent amount of precipitant is admixed in an aqueous solution, the precipitated tin hydroxide is separated and dried. Said precipitant is preferably alkali carbonate. According to one embodiment, said water-containing solution contains also alcohol and/or a filler.

Hence, a water-soluble tin salt can be precipitated by means of alkali carbonates as hydroxides or stannic acid possibly in the presence of a filler, for example in a water- or alcohol-containing solution. Precipitate is separated from the mother liquor, dried, doped mechanically with a required amount of fluoride and burned for an electrically conductive material by using the oxidation methods as described above. Particularly in reference to this method, it should be noted that in the presence of wollastonite and calcite, for example, tin salts precipitate as hydroxides and do not, in normal conditions, produce tin(II)oxide at all. The dehydration of tin hydroxide does not occur until the mixture is subjected to intensive heating, which is also suggested by the fact that the precipitate turns brown before oxidation begins.

It has thus been confirmed that the ignitability of a mixture and the electrical conductivity of a filler constituting the end product can be further improved as tin(II)oxide is prepared by bringing a water-soluble tin salt, for example tin chloride, in a carbonate solution, preferably in a concentrated aqueous solution of calcium carbonate, in the presence of dehydrating catalysts, such as fluorides, preferably in the presence of potassium fluoride. The reaction is then remarkably fast and the product has a low resistivity, about 100-300 Ω/cm²/0,1 g, as opposed to more than 500 Ω/cm²/0,1 g when manufactured with a conventional Na₂CO₃-process. The tin(II)oxide precipitated in a calcium fluoride suspension is brown in colour and its resistivity is higher than that of a product manufactured with a conventional method. Preferably, the tin(II)oxide used in the method does not contain compounds detrimental to the electrical conductivity of a product, such as for example ferrous metals.

This is described in more detail in the following examples, in which material samples were prepared in laboratory conditions and measured for guideline resistivities by effecting the measurements with a tube gauge, in which the electrodes had a surface area of about 1 cm². The amount of material weighed for the measuring tube was in all cases 0,1 g. The measuring tube was made of teflon and measuring took place under the pressure of 5 bars between two electrode rods made of copper. In addition, the measuring tube was laid on a vibrating table.

In the examples, solid substances were ground or sheared together, with the exception of calcium which was not ground.

### Example 1

This example describes a method of producing fluoride-containing tin(II)oxides for the manufacturing of conductive materials.

4,5 g (20 mmol) of tin(II)chloride (SnCl₂ 2H₂O) was dissolved in 40 ml of water. To the resulting cloudy solution was added with stirring 3,0 g of potassium carbonate and 0,12 g (2 mmol) of potassium fluoride. When foaming was over, the mixture was heated and it began to darken quickly. Stirring was continued at a temperature of 80°C for 15 minutes, followed by cooling. The bluish precipitate was filtered, washed, and dried. Yield: 2,6 g of dark blue tin(II)oxide, whose resistivity was about 80 Ω/cm²/0,1 g.

### Example 2

This example describes another method of producing fluoride-containing tin(II)oxides for the manufacturing of conductive materials.

The procedure of example 1 was repeated with the exception that, instead of potassium fluoride, 0,47 g (6 mmol) of calcium fluoride was added to the mixture. The mixture was stirred for 30 minutes at a temperature of 80°C and the precipitate was separated from mother liquor. Yield: 3,0 g of CaF₂-bearing tin(II)oxide, whose resistivity was about 1 kΩ/cm²/0,1g.

### Example 3

The example describes preparation of a conductive material with one oxidation method, the product containing no fillers.

Into a ground-jointed glass tube was weighed a finely powdered mixture, containing 1,7 g of tin oxide (SnO) of example 1 and 0,3 g of potassium fluoride. The mixture was preheated while rotating in an inclined position to a temperature of about 500°C, followed by subjecting it to air flow. The mixture ignited immediately and burned, turning into light-coloured fine particles. The product had a resistivity of about 2 Ω/cm²/0,1g.

### Example 4

The example describes preparation of a conductive material with another oxidation method, the product containing no fillers.

The procedure of example 3 was repeated by additionally grinding 0,43 g of sodium nitrite into the mixture. The mixture was preheated and ignited by means of air flow, whereby it burned quickly to fine particles. The product had a colour which was slightly darker than in example 1. The product had a resistivity of about 4 Ω/cm²/0,1g.

### Example 5

The example describes preparation of electrically conductive wollastonite with one oxidation method.

Into a ground-jointed glass tube was weighed a comminuted mixture, containing 1,7 g of tin oxide of example 1, 0,3 g of potassium fluoride, and 4,0 g of wollastonite (type WIC 10, supplier Nordkalk Oyj, Finland). The mixture was heated with stirring to a temperature of about 500°C, followed by subjecting to air flow. The mixture began to glow, turning into light-coloured particles. The product had a resistivity of about 10 kΩ/cm²/0,1g.

### Example 6

The example describes preparation of electrically conductive wollastonite with another oxidation method.

The procedure of example 5 was repeated by additionally grinding 0,43 g of potassium nitrate into the mixture. The mixture was preheated and ignited by means of air flow. The product had a colour which was slightly darker than in example 5 and its resistivity was about 3 kΩcm²/0,1g.

### Example 7

The example describes preparation of conductive calcite with the method of example 5.

Into a ground-jointed glass tube was weighed a comminuted mixture, containing 1,7 g of tin(II)oxide, 0,3 g of potassium fluoride, and 4,0 g of calcite. The mixture was heated with stirring and ignited by means of air flow to produce greenish particles. The product had a resistivity of about 30 kΩ/cm²/0,1g.

### Example 8

The example describes preparation of conductive calcite with the method of example 6.

The procedure of example 7 was repeated by additionally grinding 0,43 g of sodium nitrite into the mixture. The mixture was preheated with stirring and ignited by means of air flow to produce greyish fine particles. The product had a resistivity of about 10 kΩ/cm²/0,1g.

### Example 9

The example describes a method for the preparation of such conductive materials, in which the filler to be coated is calcium fluoride.

Into a ground-jointed glass tube was weighed 1,7 g of tin(II)oxide, which was heated intensely in the presence of gaseous ammonia for about 5 minutes. The product was allowed to cool and 0,3 g of potassium fluoride and 4,0 g of calcium fluoride were admixed with stirring with shearing therein. The mixture was burned as in the preceding examples in air flow, whereby it turned microgranular. The product had a resistivity of about 2 Ω/cm²/0,1g.

### Example 10

The example describes another method for the preparation of such conductive materials, in which the filler to be coated is calcium fluoride.

1,7 g of tin(II)oxide of example 9, heated in an ammonia flow, 0,3 g of potassium fluoride, and 4,0 g of calcium fluoride were stirred with shearing for a fine mixture. The mixture was further supplemented with 0,43 g of fine potassium nitrate and the mixture was transferred into a tubular reactor. After preheating, the mixture was ignited by means of air flow to produce greyish fine particles. The product had a resistivity of about 3 Ω/cm²/0,1g.

### Example 11 according to the invention

A mixture was comminuted, which contained 1,7 g of tin(II)oxide prepared according to example 1, 0,15 g of potassium fluoride, and 0,15 g of antimony(III)oxide. 4,0 g of fine calcium fluoride was added with stirring to the mixture. The homogenized product was transferred into a tubular reactor and preheated to a temperature of about 500°C. The mixture was subjected to air flow while stirring to produce dark grey fine particles. The product had a resistivity of about 2-3 Ω/cm²/0,1g.

### Example 12

A conductive material was prepared according to example 3 by using 1,7 g of tin(II)oxide and 0,3 g of potassium dihydrogen phosphate KH₂PO₄. The product was in the form of a grey powder and had a resistivity of about 10 Ω/cm²/0,1g.

### Example 13

A conductive material was prepared according to example 3 by using 1,7 g of tin(II)oxide and 0,3 g of diammonium hydrogen phosphate. The product was in the form of a yellowish brown powder and had a resistivity of about 30 Ω/cm²/0,1 g.

### Example 14

A conductive material was prepared according to example 3 by using 1,7 g of tin(II)oxide, 0,4 g of potassium dihydrogen phosphate, and 0,2 g of potassium fluoride. The product was in the form of a grey powder and had a resistivity of about 110 Ω/cm²/0,1g.

### Example 15

A conductive material was prepared according to example 3 by using 1,7 g of tin(II)oxide and 0,1 g of antimony(III)oxide. The product was in the form of a dark bluish grey powder and had a resistivity of about 1,2 Ω/cm²/0,1g.

## Claims

1. A method for manufacturing an electrically conductive stanniferous material, in which method
a reaction mixture, which contains
- at least a tin(II)-bearing compound selected from a group consisting of tin(II)oxide, tin(II)hydroxide, tin(II)nitride, and mixtures thereof, and producing a tin(IV)-bearing compound by partial oxidation in reaction conditions,
- at least one other compound selected from a group consisting of antimony(III)oxide and indium(III)oxide, and
- fluoride selected from a group consisting of alkali metal fluorides, alkali earth fluorides, tin fluoride, antimony fluoride, indium fluoride, fluorite minerals, and mixtures thereof, the proportion of fluoride in the reaction mixture being 1-30 % by weight as calculated from the total weight of a tin(II)-bearing compound and at least one other compound,
is brought to a temperature of 100 - 1000 °C in the presence of an oxidant selected from a group consisting of air, oxygen, ozone, and inorganic oxidants, whereby the said reaction mixture is in a solid state.

2. A method according to claim 1, **characterized in that** the fluoride is calcium fluoride.

3. A method according to claim 1, **characterized in that** the inorganic oxidant is selected from a group consisting of nitrites, nitrates, chlorates, perchlorates, chromates, permanganates, and mixtures thereof.

4. A method according to claim 3, **characterized in that** the inorganic oxidant is nitrite or nitrate.

5. A method according to claim 1, **characterized in that** the tin(II)-bearing compound is tin(II)hydroxide, and that it is prepared by admixing a filler, water-soluble tin salt and at least an equivalent amount of a precipitant in an aqueous solution, by separating the precipitated tin(II)hydroxide and by drying the tin(II)hydroxide.

6. A method according to claim 5, **characterized in that** the precipitant is an alkali carbonate.

7. A method according to any of the preceding claims, **characterized in that** the reaction mixture further contains a filler.

8. A method according to claim 7, **characterized in that** the filler is selected from a group consisting of barium sulphate, glass, silica, wollastonite, calcite, calcium fluoride, phosphate minerals, fluorite minerals, and mixtures thereof.

9. A method according to any of the preceding claims, **characterized in that** the reaction mixture further contains salts of other elements.

10. A method according to claim 9, **characterized in that** said salt of another element is an alkali metal phosphate.

11. A method according to claim 10, **characterized in that** said alkali metal phosphate is an acidic calcium phosphate.

## Patentansprüche

1. Verfahren zum Herstellen eines elektrisch leitfähigen, zinnhaltigen Materials, in welchem Verfahren ein Umsetzungsgemisch, welches
- mindestens eine Zinn(II)-tragende Verbindung, ausgewählt aus einer Gruppe bestehend aus Zinn(II)oxid, Zinn(II)hydroxid, Zinn(II)nitrid und Gemischen daraus, und welche eine Zinn(IV)-tragende Verbindung durch teilweise Oxidation unter Umsetzungsbedingungen herstellt,
- mindestens eine weitere Verbindung, ausgewählt aus einer Gruppe bestehend aus Antimon(III)oxid und Indium(III)oxid, und
- Fluorid, ausgewählt aus einer Gruppe bestehend aus Alkalimetallfluoriden, Erdalkalifluoriden, Zinnfluorid, Antimonfluorid, Indiumfluorid, Fluoritmineralien und Gemischen daraus, wobei der Anteil an Fluorid in dem Umsetzungsgemisch 1-30 Gew.-% ist, wie von dem Gesamtgewicht einer Zinn(II)-tragenden Verbindung und mindestens einer weiteren Verbindung berechnet,
enthält, in Anwesenheit eines Oxidationsmittels, ausgewählt aus einer Gruppe bestehend aus Luft, Sauerstoff, Ozon und anorganischen Oxidationsmitteln, auf eine Temperatur von 100-1000°C gebracht wird, wobei sich das besagte Umsetzungsgemisch in einem festen Zustand befindet.

2. Verfahren gemäß Anspruch 1, **dadurch gekennzeichnet, dass** das Fluorid Calciumfluorid ist.

3. Verfahren gemäß Anspruch 1, **dadurch gekennzeichnet, dass** das anorganische Oxidationsmittel ausgewählt ist aus einer Gruppe bestehend aus Nitriten, Nitraten, Chloraten, Perchloraten, Chromaten, Permanganaten und Gemischen daraus.

4. Verfahren gemäß Anspruch 3, **dadurch gekennzeichnet, dass** das anorganische Oxidationsmittel Nitrit oder Nitrat ist.

5. Verfahren gemäß Anspruch 1, **dadurch gekennzeichnet, dass** die Zinn(II)-tragende Verbindung Zinn(II)hydroxid ist und dass sie durch Beimischen eines Füllstoffs, wasserlöslichen Zinnsalzes und mindestens einer äquivalenten Menge eines Ausfällungsmittels in einer wässerigen Lösung, durch Abtrennen des ausgefällten Zinn(II)hydroxids und durch Trocknen des Zinn(II)hydroxids hergestellt ist.

6. Verfahren gemäß Anspruch 5, **dadurch gekennzeichnet, dass** das Ausfällungsmittel ein Alkalicarbonat ist.

7. Verfahren gemäß einem der vorangehenden Ansprüche, **dadurch gekennzeichnet, dass** das Umsetzungsgemisch ferner einen Füllstoff enthält.

8. Verfahren gemäß Anspruch 7, **dadurch gekennzeichnet, dass** der Füllstoff ausgewählt ist aus einer Gruppe bestehend aus Bariumsulfat, Glas, Siliciumdioxid, Wollastonit, Calcit, Calciumfluorid, Phosphatmineralien, Fluoritmineralien und Gemischen daraus.

9. Verfahren gemäß einem der vorangehenden Ansprüche, **dadurch gekennzeichnet, dass** das Umsetzungsgemisch ferner Salze von weiteren Elementen umfasst.

10. Verfahren gemäß Anspruch 9, **dadurch gekennzeichnet, dass** besagtes Salz eines weiteren Elements ein Alkalimetallphosphat ist.

11. Verfahren gemäß Anspruch 10, **dadurch gekennzeichnet, dass** besagtes Alkalimetallphosphat ein saures Calciumphosphat ist.

## Revendications

1. Procédé de fabrication d'un matériau stannifère électriquement conducteur, procédé dans lequel un mélange réactionnel, qui contient
- au moins un composé stanneux sélectionné parmi un groupe se composant de dioxyde d'étain, d'hydroxyde stanneux, de nitrure d'étain et de mélanges de ces composés, et produisant un composé stannique par oxydation partielle dans des conditions de réaction,
- au moins un autre composé sélectionné parmi un groupe se composant de trioxyde d'antimoine et de trioxyde d'indium, et
- du fluorure sélectionné parmi un groupe se composant de fluorures de métaux alcalins, de fluorures alcalino-terreux, de fluorure d'étain, de fluorure d'antimoine, de fluorure d'indium, de minéraux à base de fluorine, et de mélanges de ces composés, la proportion de fluorure dans le mélange réactionnel étant de 1 % à 30 % en poids, ce pourcentage étant calculé d'après le poids total d'un composé stanneux et d'au moins un autre composé,
est porté à une température de 100°C à 1000°C, en présence d'un oxydant sélectionné parmi un groupe se composant d'air, d'oxygène, d'ozone et d'oxydants inorganiques, ledit mélange réactionnel étant dans un état solide.

2. Procédé selon la revendication 1, **caractérisé en ce que** le fluorure est du fluorure de calcium.

3. Procédé selon la revendication 1, **caractérisé en ce que** l'oxydant inorganique est sélectionné parmi un groupe se composant de nitrites, de nitrates, de chlorates, de perchlorates, de chromates, de permanganates et de mélanges de ces oxydants.

4. Procédé selon la revendication 3, **caractérisé en ce que** l'oxydant inorganique est un nitrite ou un nitrate.

5. Procédé selon la revendication 1, **caractérisé en ce que** le composé stanneux est de l'hydroxyde stanneux et qu'il est préparé en mélangeant une charge, du sel d'étain soluble dans l'eau et au moins une quantité équivalente d'un précipitant dans une solution aqueuse, en séparant l'hydroxyde stanneux précipité et en séchant l'hydroxyde stanneux.

6. Procédé selon la revendication 5, **caractérisé en ce que** le précipitant est un carbonate alcalin.

7. Procédé selon l'une quelconque des revendications précédentes, **caractérisé en ce que** le mélange réactionnel contient en outre une charge.

8. Procédé selon la revendication 7, **caractérisé en ce que** la charge est sélectionnée parmi un groupe se composant de sulfate de baryum, de verre, de silice, de wollastonite, de calcite, de fluorure de calcium, de minéraux phosphatés, de minéraux à base de fluorine, et de mélanges de ces composants.

9. Procédé selon l'une quelconque des revendications précédentes, **caractérisé en ce que** le mélange réactionnel contient en outre des sels d'éléments autres.

10. Procédé selon la revendication 9, **caractérisé en ce que** ledit sel d'un autre élément est un phosphate de métal alcalin.

11. Procédé selon la revendication 10, **caractérisé en ce que** ledit phosphate de métal alcalin est un phosphate de calcium acide.
